# EUROPÄISCHE PATENTSCHRIFT

(11) **EP 3 825 101 B1**
(45) Veröffentlichungstag und Bekanntmachung des Hinweises auf die Patenterteilung: **25.10.2023**
(21) Anmeldenummer: 20206125.5
(22) Anmeldetag: 06.11.2020
(51) Int. Cl.: B29C 64/147, B29C 64/236, B29C 64/241, B33Y 10/00, B33Y 30/00, B32B 7/12

(54) **VORRICHTUNG UND VERFAHREN ZUR HERSTELLUNG EINES GENERATIV GEFERTIGTEN ERZEUGNISSES**
DEVICE AND METHOD FOR PRODUCING A PRODUCT BY MEANS OF GENERATIVE MANUFACTURE
DISPOSITIF ET PROCÉDÉ DE FABRICATION D'UN PRODUIT FABRIQUÉ DE MANIÈRE ADDITIVE

(30) Priorität: 19.11.2019 DE 102019131215
(43) Veröffentlichungstag der Anmeldung: 26.05.2021
(73) Patentinhaber: Technische Universität Dresden, 01067 Dresden (DE)
(72) Erfinder: LIPPITSCH, Stefan, 01099 Dresden (DE); SIEGEL, Carolin, 01189 Dresden (DE); WAGENFÜHR, André, 01109 Dresden (DE)
(74) Vertreter: Gottfried, Hans-Peter

(56) Entgegenhaltungen:
- GB-A- 2 560 310
- US-A1- 2015 251 351

## Beschreibung

Die Erfindung betrifft eine Vorrichtung zur Herstellung wenigstens eines generativ gefertigten Erzeugnisses aus übereinander angeordneten und miteinander gefügten Konturschichten aus einem flächigen Material, wobei ein zur Aufnahme des Erzeugnisses ausgebildeter Hubtisch vorgesehen ist, der vertikal über einen Hubbereich verfahrbar und der weiterhin ausgebildet ist, das flächige Material, bevor es ausgeschnitten wird, relativ zu dem Erzeugnis zu positionieren, wobei weiterhin eine Schneideinrichtung vorgesehen ist, mit der aus einer ersten und jeder weiteren Lage des flächigen Materials eine Konturschicht ausgeschnitten werden kann, wobei eine Relativbewegung von der Schneideinrichtung und dem flächigen Material während des Schneidvorgangs zum Ausschneiden der Konturschicht aus dem flächigen Material führt. Die Erfindung betrifft ebenfalls ein Verfahren zur Herstellung wenigstens eines generativ gefertigten Erzeugnisses aus übereinander angeordneten und miteinander gefügten Konturschichten aus einem flächigen Material, wobei eine erste und jede weitere Lage des flächigen Materials auf einem Hubtisch oder auf dem darauf teilweise ausgebildeten Erzeugnis derart positioniert wird, dass aus dem flächigen Material eine Konturschicht an der für den Aufbau des Erzeugnisses vorgesehenen Position ausgeschnitten werden kann, und danach die Konturschicht ausgeschnitten wird.

Ein Verfahren zur Herstellung aus Materiallagen gefertigter Erzeugnisse, bekannt als Laminated Object Manufacturing (LOM), ist ein Fertigungsverfahren aus dem Bereich der generativen Fertigung, mit dem ein Werkstück schichtweise, insbesondere aus Papier, aufgebaut wird. Die angestrebte Form wird aus Schichten, insbesondere Papierschichten, so auch aus speziellen Papieren, wie keramischen Papieren, aber auch aus verschiedenen Kartonsorten, Pappen, Kunststoffen, Furnieren, Metallen oder faserverstärkten Materiallagen sowie deren Kombination, aufgebaut. Jede neue Schicht wird mit der vorherigen Schicht durch Fügen verbunden. Anschließend wird die Kontur der aktuellen Schicht, z. B. mittels Messer, Heißdraht, Erosion oder Laser ausgeschnitten. Im Anschluss folgt die nächste Schicht, bis das Werkstück bzw. Bauteil, nachfolgend als Erzeugnis bezeichnet, fertiggestellt ist.

Unter den generativen Fertigungsverfahren stellt das Fertigungsverfahren LOM eine von vielen Möglichkeiten zur flexiblen Fertigung von physischen Bauteilen dar. Bisher findet es Verwendung für Schichtaufbauten aus dünnen Materialien, wie Papier, und wird häufig für kleinere Bauteile verwendet. Die verfahrensbedingt mangelhafte Materialausbeute sowie das zu anderen generativen Fertigungsverfahren vergleichsweise aufwändige Handling führen dazu, dass das Verfahren sehr selten in der praktischen Anwendung vorzufinden ist.

So gut wie allen generativen Fertigungsverfahren, umgangssprachlich oft als 3D-Druck bezeichnet, ist gemein, dass sie bestimmte Eigenschaften besitzen, welche zugleich Vorteile gegenüber herkömmlichen Fertigungsverfahren darstellen können. Dies sind insbesondere die Generierung der Schichtgeometrie und somit des physischen Bauteils direkt aus den 3D-CAD-Daten. Häufig werden dadurch auch Produktentwicklungszeit- und -kosten gesenkt. Zudem kann auf die Herstellung und Verwendung produktspezifischer Werkzeuge verzichtet werden und die Möglichkeit zum Bau komplexer Strukturen wird eröffnet, welche mit traditionellen Verfahren nicht herstellbar sind. Hierzu gehören beispielsweise Leichtbaustrukturen mit innenliegenden Hohlräumen.

Die Bauteileigenschaften der Erzeugnisse, darunter vor allem die mechanischen Materialeigenschaften, ergeben sich aus den verwendeten Materialien und dem Bauprozess, wobei auch die Kombination verschiedener Werkstoffe möglich ist. Die Erzeugnisse können bei der Verwendung von Materialien mit richtungsabhängigen Eigenschaften grundsätzlich in jeder beliebigen Orientierung gebaut werden, wodurch eine gezielte Einstellung anisotroper Eigenschaften möglich wird.

Aus demselben Datensatz können, je nach Verfahrensrandbedingungen, Bauteile aus unterschiedlichen Materialien und durch Skalieren auch von unterschiedlicher Größe hergestellt werden. Bei allen Verfahren werden Bauteile durch das Schichten von Materiallagen aufgebaut. Dieses Aufbauen erfolgt immer in der Bauebene. In Normalenrichtung zur flächigen Ausdehnung der Materiallagen sind die Bauteile durch die notwendigen Ebenenwechsel immer stufig. Dieser sogenannte Treppenstufeneffekt kann durch geringere Schichtdicken reduziert werden. Einhergehend damit steigt jedoch auch die Zeit, die für das Bauen benötigt wird. Oft stört der Treppenstufeneffekt aber auch nicht, da das Bauteil dennoch seine Funktion erfüllt, bzw. dieser Effekt vom Gestalter explizit erwünscht ist. Es entfällt zudem die Problematik, das Bauteil aufzuspannen.

Das LOM-Verfahren wird auch als Schicht-Laminat-Verfahren bezeichnet. Dabei wird die benötigte Schicht aus einem flächigen Material ausgeschnitten. Bevorzugt wird dies mit einem Laserstrahl als Trennwerkzeug bzw. im speziellen Fall als Trennmedium durchgeführt. Die einzelnen Schichten sind zuvor miteinander zu verkleben. Aufgrund des Trennprozesses mit sich anschließendem Fügeprozess wird das Verfahren auch als subtraktiv-additives Verfahren bezeichnet und nimmt unter den generativen Fertigungsverfahren eine Sonderstellung ein.

Bei einer häufig vorzufindenden Ausführungsform wird Papier von einer Rolle entspeichert und durch einen Bereich, in dem ein Klebstoffauftrag erfolgt, hindurch zu einem Bauraum geführt. Dort wird die neue Lage mit dem bereits teilweise generierten Erzeugnis gefügt und anschließend die Kontur der neuen Materialschicht mit Hilfe eines Laserstrahls ausgeschnitten. Im Anschluss verfährt ein Bauteiltisch um eine Schichtdicke nach unten und die Papierbahn wird weiter gefördert. Alternativ sind auch andere Ausführungsformen vorgesehen. So ist z. B. eine Variante bekannt, bei der Bögen in der Größe des DIN-A4-Formats verarbeitet werden können.

Im Vergleich mit anderen generativen Fertigungsverfahren weist das LOM-Verfahren folgende Nachteile auf:
- die Präzision erzeugter Teile ist häufig geringer als bei anderen 3D-DruckVerfahren;
- der Herstellungsprozess ist aufwändiger, da Schichten miteinander verklebt und gehandhabt werden müssen;
- meist erfolgt die Verarbeitung geringer Materialdicken, was zu einem langsamen Bauprozess führt;
- je nach Bauteilgeometrie tritt ein Verschnitt von bis zu 90 % auf.

Fertigungsverfahren gemäß dem Oberbegriff der vorliegenden Erfindung sind aus dem Stand der Technik bekannt. Der "3D printing guide" vom 15.06.2015 (https://www.slideshare.net/unclepig/3d-printingguide) beschreibt eine Vorrichtung zur Herstellung eines generativ gefertigten Erzeugnisses aus übereinander angeordneten und verklebten Schichten aus Kopierpapier. Ein zur Aufnahme des Erzeugnisses vorgesehener Hubtisch (*Platform*) ist in z-Richtung verfahrbar. Es ist weiterhin eine Schneideinrichtung (*Tungsten Carbide Blade*) vorhanden, mit der aus den Papierschichten eine Konturschicht ausgeschnitten werden kann. Allerdings ist es weder vorgesehen noch erscheint es ausführbar, das Kopierpapier zum Ausscheiden gegenüber der Schneideinrichtung zu bewegen.

Eine weitere bekannte Lösung für ein Fertigungsverfahren gemäß dem Oberbegriff der vorliegenden Erfindung ist in LANGNAU, Leslie: What is selective deposition lamination? vom 22.06.2016 (https://www.designworldonline.com/selective-depositionlamination/) beschrieben. Auch dort ist es nicht vorgesehen, das Material zum Ausscheiden gegenüber der Schneideinrichtung zu bewegen.

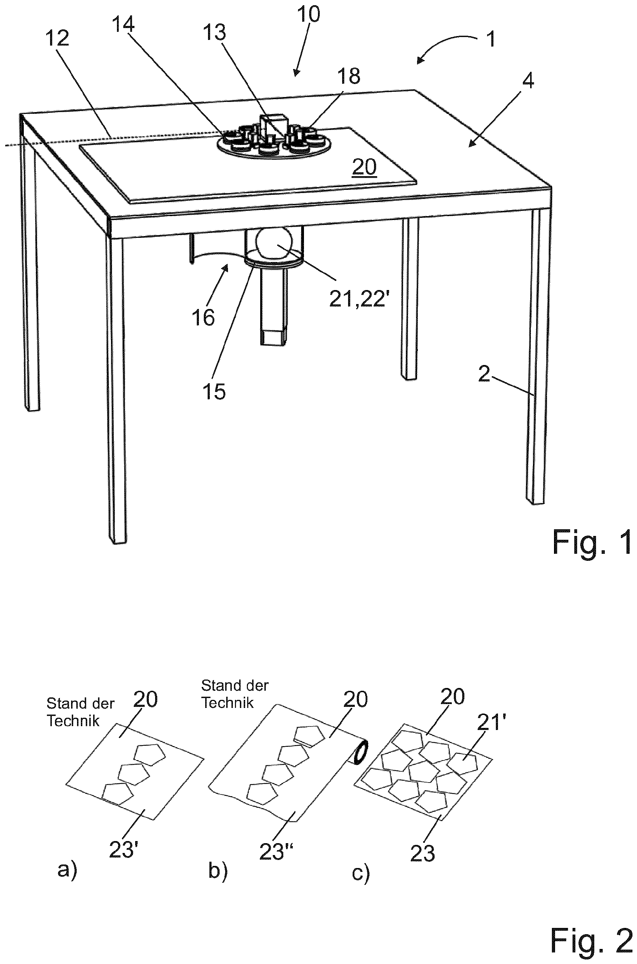

Die Druckschrift US 2015/0 251 351 A1 offenbart eine Vorrichtung 100, 200, 2000 zur Herstellung eines generativ gefertigten Erzeugnisses 150 aus übereinander angeordneten und miteinander gefügten Konturschichten aus einem flächigen Material 136, wobei ein zur Aufnahme des Erzeugnisses 150 ausgebildeter Hubtisch 140, 240 mit einer Arbeitsbühne 144 (*laminating platform*) vorhanden ist, der vertikal über einen Hubbereich verfahrbar und damit ausgebildet ist, das flächige Material 136 relativ zu dem Erzeugnis 150 zu positionieren, wobei weiterhin eine Schneideinrichtung 172 vorhanden ist, mit der aus einer ersten und jeder weiteren Lage des flächigen Materials 134 eine Konturschicht ausgeschnitten werden kann (Figuren 1 bis 6, 27, Absätze [0013], [0015], [0019] bis [0024], [0045], [0046], [0056], [0057], [0062] bis [0088], [0122] bis [0124], [0134], [0135]. Allerdings ist gemäß Absatz [0069] und Figur 1 die Schneideinrichtung 172 relativ zu dem ortsfesten flächigen Material 136 in x- und y-Richtung bewegbar. Eine ausschließliche Bewegung des Materials bei feststehender Schneideinrichtung ist nicht vorgesehen.

Aus der Druckschrift WO 2019/ 055 570 A1 ist eine Vorrichtung 100 zur Herstellung eines generativ gefertigten Erzeugnisses 98 aus übereinander angeordneten und miteinander gefügten Konturschichten aus einem flächigen Material bekannt, wobei ein zur Aufnahme des Erzeugnisses ausgebildeter Hubtisch 40 vorhanden ist, der vertikal über einen Hubbereich verfahrbar und damit ausgebildet ist, das flächige Material relativ zu dem Erzeugnis zu positionieren, wobei weiterhin eine Schneideinrichtung 60 vorgesehen ist, mit der aus einer ersten und jeder weiteren Lage des flächigen Materials eine Konturschicht ausgeschnitten werden kann (vgl. Fig. 1, Seite 2, Zeile 30 bis Seite 3, Zeile 23; Seite 5, Zeile 12 bis Seite 7, Zeile 33; Seite 10 Zeilen 1 bis 7). Eine Bewegung des Materials bei feststehender Schneideinrichtung ist auch bei dieser Lösung nicht vorgesehen.

Die Druckschrift US 2015/251351 A1 offenbart eine Vorrichtung (Fig. 2) zur Herstellung wenigstens eines generativ gefertigten Erzeugnisses aus übereinander angeordneten und miteinander gefügten Konturschichten aus einem flächigen Material [0083], wobei ein zur Aufnahme des Erzeugnisses ausgebildeter Hubtisch (siehe Fig. 2; 100, 140, 146) vorgesehen ist, der vertikal über einen Hubbereich verfahrbar und der weiterhin ausgebildet ist, das flächige Material relativ zu dem Erzeugnis zu positionieren [0071], wobei weiterhin eine Schneideinrichtung (172) vorgesehen ist, mit der aus einer ersten und jeder weiteren Lage des flächigen Materials eine Konturschicht ausgeschnitten werden kann, wobei eine Relativbewegung von der Schneideinrichtung und dem flächigen Material während des Schneidvorgangs zum Ausschneiden der Konturschicht aus dem flächigen Material führt [0069], wobei der Hubtisch zur horizontalen Bewegung des aufgenommenen flächigen Materials über einen Bearbeitungsbereich der ortsfest wirksamen Schneideinrichtung relativ zu der Schneideinrichtung ausgeführt ist (Fig. 2). Der vorgeschlagene Hubtisch ist derart ausgeführt, dass das aufgenommene Material beliebig in vertikaler sowie auch in horizontaler Richtung über den Bearbeitungsbereich der Schneideinrichtung geführt werden kann. Jedoch ist nicht vorgesehen, dass die Bewegung des Hubtisches zu einer Schneidwirkung durch die Schneideinrichtung führt.

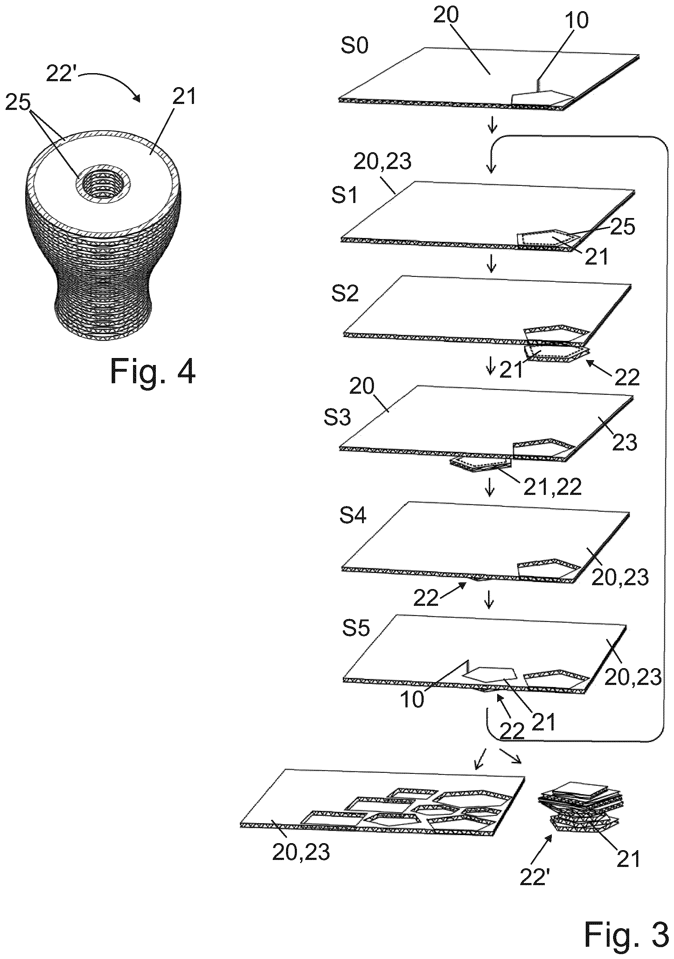

Die Druckschrift GB 2 560 310 A beschreibt ein Verfahren zur Herstellung wenigstens eines generativ gefertigten Erzeugnisses aus übereinander angeordneten und miteinander gefügten Konturschichten aus einem flächigen Material (S. 1, Z. 4-8; Fig. 5), wobei eine erste und jede weitere Lage des flächigen Materials (siehe Fig. 4) auf einem Hubtisch (460) oder auf dem darauf teilweise ausgebildeten Erzeugnis ("Build") derart positioniert wird, dass aus dem flächigen Material eine Konturschicht an der für den Aufbau des Erzeugnisses vorgesehenen Position ausgeschnitten werden kann, und danach die Konturschicht ausgeschnitten wird (Fig. 5; Schritt 550), wobei in einem ersten Schritt die Positionierung des flächigen Materials durch Bewegung in der horizontalen Ebene in x- und y-Richtung und/oder durch Drehung um die vertikale z-Achse in einem Bearbeitungsbereich einer lokal wirkenden Schneideinrichtung erfolgt und diese auf dem Hubtisch aufgenommen oder mit dem teilweise gebildeten Erzeugnis vereinigt wird (Fig. 5; Schritt 540; i.V.m. Fig. 4), wobei in einem dritten Schritt die Konturschicht in der vorgesehenen Position aus dem flächigen Material ausgeschnitten wird (Fig. 5; Schritt 550, i.V.m. Fig. 4).

Es ist daher angesichts der vorgenannten Nachteile die Aufgabe der vorliegenden Erfindung, Erzeugnisse schnell bei zugleich geringem Verschnitt in einem einfachen Verfahren zu fertigen.

Die Aufgabe wird gelöst durch eine Vorrichtung zur Herstellung wenigstens eines generativ gefertigten Erzeugnisses aus übereinander angeordneten und miteinander gefügten Konturschichten aus einem flächigen Material. Hierzu ist ein Bauraum vorgesehen, dessen Grundfläche die Grundfläche des größten zu fertigenden Erzeugnisses und dessen beispielsweise durch Absenken eines Hubtischs maximal erreichbare Höhe auch die Höhe des größten zu fertigenden Erzeugnisses begrenzt. Nach der Erfindung ist der zur Aufnahme des Erzeugnisses geeignete Hubtisch vertikal über einen Hubbereich verfahrbar und zudem geeignet und ausgeführt, das flächige Material relativ zu dem Erzeugnis in einer horizontalen Ebene zu positionieren.

Weiterhin ist eine Schneideinrichtung vorgesehen, mit deren Hilfe aus einer ersten und jeder weiteren Lage des flächigen Materials eine Konturschicht ausgeschnitten werden kann. Das Ausschneiden der Konturschicht erfordert eine derart ausgeführte Schneideinrichtung, welche sich der Kontur einer jeden Lage und Form anpassen kann. Aus diesem Grund wird eine punktuell wirkende Schneideinrichtung benötigt, wobei die zur Konturierung erforderliche Schnittlinie, die beispielsweise eine Schnittkurve sein kann, durch die Relativbewegung zwischen dem Verarbeitungsgut, im Besonderen dem flächigen Material, und der Schneideinrichtung erzeugt wird.

Zum Ausschneiden kann ein oszillierendes Messer bzw. eine Nadel zum Einsatz kommen. Das Schneidwerkzeug muss auf jeden Fall durch das Material und geringfügig darüber hinaus bewegt werden. Sofern verfahrensbedingt zwei Materiallagen bereits miteinander verklebt sind, würde dies aber zu einer Schädigung der darunterliegenden Materiallage führen, sofern diese über die Schnittlinie seitlich hinausreicht. Soll demnach eine von zwei bereits übereinanderliegenden oder sogar miteinander verklebten Materiallagen geschnitten werden, sind berührungslose Trennprozesse vorteilhaft. Von der Schneidvorrichtung im Sinne der Erfindung ist auch ein Schneidmedium umfasst, wie z. B. ein Wasserstrahl oder ein Laserstrahl, der von einer Laserstrahlvorrichtung ausgeht und als Schneidvorrichtung bzw. Schneidmedium wirkt.

Die Schneideinrichtung ist als eine ortsfeste Schneideinrichtung ausgeführt, zu der sich das flächige Material so bewegt, dass die gewünschte Konturschicht ausgeschnitten wird. Es sind folgende Möglichkeiten der Relativbewegungen zwischen Schneideinrichtung bzw. Schneidpunkt und Material vorgesehen. Als Schneidpunkt wird die Stelle bezeichnet, an der die Schneideinrichtung bzw. das Schneidmedium auf das Material einwirkt.

Die Schneideinrichtung bzw. der Schneidpunkt sind fest positioniert. Das flächige Material, z. B. ein Materialbogen, muss zum Ausschnitt von Material aus dem flächigen Material vor dem Trennvorgang an einen hierzu geeigneten Ort verfahren werden; zum Trennen sind das flächige Material und das Erzeugnis zu bewegen. Für die Drehung um die z-Achse sind als Varianten vorgesehen:
1. Drehung des Materialbogens oder
2. Drehung des Erzeugnisses (bevorzugte Variante).

Zusätzlich zu den zuvor beschriebenen horizontalen Bewegungen werden vertikale Bewegungen benötigt. Dies ist insbesondere eine vertikale Relativbewegung des ausgeschnittenen Abschnittes, der Konturschicht auf dem im Aufbau befindlichen, teilweise generierten Erzeugnis, relativ zum Materialbogen, damit dieser danach in der Ebene verschoben werden und ein weiterer Schichtaufbau erfolgen kann.

Zusätzlich können alle Varianten so ausgeführt werden, dass neben der Verarbeitung von Materialbögen auch eine Verarbeitung von Materialbahnen, als die das flächige Material vorliegen kann, möglich ist. Allerdings müssten eine solche Materialbahn zusammen mit der Rolle oder zusammen mit einem anhängenden Abschnitt der Materialbahn, der bereits von der Rolle entspeichert wurde, bewegt werden, was zu einer aufwändigeren Verfahrensführung führen würde.

Besondere Vorteile ergeben sich daher aus denjenigen Ausführungsformen, mit denen auch Materialbahnen verarbeitbar sind und dennoch alle Vorteile des einzelnen, flexibel in der Ebene beweglichen Bogens erreichbar sind. Durch das Verdrehen des Materials in der horizontalen Ebene können bei der Verarbeitung richtungsabhängiger Materialien verschiedene Eigenschaften gezielt eingestellt werden. Diese Eigenschaften reichen von der Homogenisierung bis zu stark richtungsabhängigen Eigenschaften des Bauteils. Zudem kann durch die Drehung die Schnittoptimierung weiter verbessert werden, wodurch sich der Verschnitt noch weiter reduzieren lässt.

Besonders bevorzugt ist die Schneideinrichtung als eine Laseranordnung ausgeführt, bei der die Verwendung eines Laserstrahls als Schneidmedium, als Strahlmedium zum Trennen und zum Ausschnitt der Konturschichten erfolgt. Die Vorteile einer solchen Schneideinrichtung verwirklichen sich insbesondere vor dem Hintergrund, dass ein Faserwerkstoff wie Papier, Karton oder Pappe als das flächige Material zum Einsatz kommt. In der Papierverarbeitung finden in aller Regel CO₂-Laser, welche zu den elektrisch angeregten Gaslasern zählen, Verwendung. Sie sind vergleichsweise kostengünstig und effizient, ihr Leistungswirkungsgrad liegt bei etwa 10 - 20 %. In Abhängigkeit von der Resonatoreinstellung können CO₂-Laser Wellenlängen zwischen 9,6 und 10,6 µm erzeugen. Ebenfalls sind CO₂-Laser hinsichtlich ihrer Dauerstrichleistung führend.

Beim Schneiden von Papierwerkstoffen mittels Laserstrahls sublimiert das Papier und tritt gasförmig als Rauch mit hoher Geschwindigkeit aus dem Material aus. Dabei transportiert der Rauch die Wärme vom Papier weg, wodurch es nur geringfügig thermisch belastet wird. Mit optimalen Parametereinstellungen und einer guten Umgebungsgestaltung der Trennzone, beispielsweise durch Zublasung und Tischabsaugung, können selbst feinste Konturen schmauchfrei geschnitten werden.

Vorteilhaft ist die Laserbearbeitung von ungestrichenen Papieren, da die einwirkende Energie direkt auf die Fasern des Papiers wirkt und somit der Zusammenhalt lokal aufgelöst wird. Bei gestrichenen Papieren muss zusätzlich der aufgetragene Strich vom Laserstrahl durchdrungen werden. Da dieser oft aus Pigmenten und weiteren Additiven, wie Kaolin, besteht, ist dies je nach Papiersorte schwieriger. Auch das schmauchfreie Trennen wird hierdurch erschwert. Die meisten Pappen und insbesondere Wellpappen, wie sie für die vorliegende Erfindung zum Einsatz kommen sollen, bestehen vorteilhafterweise aus ungestrichenen Papieren.

Neben dem eigentlichen Trennen zum Generieren der Erzeugnisse nach dem erfindungsgemäßen Verfahren bietet die Integration eines Lasers zusätzliche Vorzüge. So können weitere laserbasierte Papierverarbeitungsvorgänge genutzt werden. Dazu zählen die Tiefengravur, die helle Gravur, das Anritzen, die Gravurlinie und die Perforation. Weitere Vorteile liegen in den eingesparten Werkzeugkosten. Diese ermöglichen einen wirtschaftlich vorteilhaften und erfolgreichen Einsatz des Lasers für geringe Stückzahlen bis hin zu mittlerer Serienfertigung.

Weiterhin ist ein vorteilhafter Einsatz der vorliegenden Erfindung dort gegeben, wo das manuelle Zusammenfügen von Ausschnitten zum zu generierenden Erzeugnis unwirtschaftlich bzw. unpräzise wäre und sich andere Konstruktionsweisen, wie z. B. speziell entwickelte Faltgeometrien aus Wellpappe, in Bezug auf die Produktionszahlen noch nicht lohnen, da die dafür benötigten Zuschnitte meist durch Flachbettstanz-Werkzeuge hergestellt werden.

Der Laser zum Trennen von Papier verkörpert weitere Vorteile:
- Schnittkanten werden ohne Quetschungen erzeugt, was vor allem beim Trennen von Wellpappe entscheidend ist,
- kein Werkzeugverschleiß, der zu Qualitätsminderung im Zeitverlauf führen würde,
- Laserschneiden von extrem feinen Konturen und praktisch radiusfreien Innenkanten wird möglich,
- frei wählbarer Konturverlauf und sofortige Muster- oder Serienproduktion aus einem CAD-System,
- hohe Wirtschaftlichkeit beim Laserschneiden kleiner Losgrößen bis hin zur mittleren Serienfertigung,
- sehr geringe Laserleistung beim Schneiden von Papier reicht aus, dadurch geringe Energie- und Investitionskosten.

Eine Strahlführung des Laserstrahls erfolgt beispielweise mit Hilfe von Spiegeln oder Lichtleitfasern. Damit wird der Strahl möglichst verlustarm und ohne Beeinträchtigung der Strahlqualität geführt. Für die Auswahl optischer Komponenten sind Eigenschaften wie Wellenlänge, Leistungsdichte, Bearbeitungsdurchmesser und der technologisch bedingte Arbeitsabstand zu berücksichtigen. Über die Strahlformungselemente können Laserstrahlparameter wie Strahlaufweitung, Divergenzeinstellung, Strahlfokussierung, Strahlquerschnittanpassung, Polarisationsänderung und Strahlüberlagerung gezielt verändert werden.

Nach der Erfindung ist es vorgesehen, dass wenigstens eine Handhabungseinheit zur horizontalen Bewegung des Materials über einen Bearbeitungsbereich auf einem Maschinentisch relativ zu der Schneideinrichtung vorgesehen ist, wobei die Schneideinrichtung lokal wirksam ist und die Handhabungseinheit in Zusammenwirken mit der Schneideinrichtung zum Ausschneiden der Konturschicht aus dem flächigen Material ausgeführt ist. Ziel ist eine möglichst verschnittarme Herstellung, die eine gezielte, optimierte Positionierung des flächigen Materials vor dem Ausschneiden bei einer entsprechenden Auswahl des Bereichs, wo der Ausschnitt der nächsten Schichtkontur erfolgen soll, erfordert.

Die Handhabungseinheit umfasst vorteilhafterweise einen oder mehrere Vakuumgreifer, vor allem wenn die erfindungsgemäße Vorrichtung zur Aufnahme biegeschlaffer Materialien geeignet sein soll.

Bevorzugt ist jedoch ein zumindest vertikal über einen Hubbereich verfahrbarer, zur Aufnahme des zu generierenden Erzeugnisses geeigneter Hubtisch vorgesehen. Der Hubtisch kann dann bis an die Ebene herangefahren werden, in der die erste Konturschicht ausgeschnitten worden ist, wenn die Konturschicht erst nach der Aufnahme auf dem Erzeugnis ausgeschnitten wird. Für die Schnittoptimierung sorgt die Positionierung des Materials in Bezug auf den Bereich, in dem die nächste Konturschicht ausgeschnitten werden soll.

Eine vorteilhafte Ausführung des Hubtischs sieht die zusätzliche Drehbewegung des Tisches um die vertikale Hubachse, nachfolgend auch als z-Achse bezeichnet, vor. Der Hubtisch umfasst dazu eine Einrichtung zum Drehen des zu generierenden, im Aufbau befindlichen Erzeugnisses um die vertikale Achse, die z-Achse. Nach einer Vorzugsvariante ist es vorgesehen, dass sich der Hubtisch 360° um seine vertikale Achse drehen kann, wodurch eine weitere Schnittoptimierung sowie eine gezielte Ausrichtung der Materiallagen zueinander erzielt werden können. Derart können sowohl eine noch effektivere Schnittoptimierung, als auch gezielt richtungsabhängige Eigenschaften des zu generierenden Erzeugnisses bei der Verarbeitung von Materialien richtungsabhängigen Eigenschaften erreicht werden.

Bei einer vorteilhaften Ausgestaltung der erfindungsgemäßen Vorrichtung bzw. des aus deren Verwendung resultierenden Verfahrens wird nach dem Trennvorgang einer Konturschicht des Erzeugnisses wenigstens eine Klebstoffraupe nahe des Rands der ausgeschnittenen Konturschicht, an der Schnittkante, immer auf der Seite der ausgeschnittenen Konturschicht aufgebracht. Der so beschichtete Ausschnitt verfährt im folgenden Schritt relativ zum Material in z-Richtung. Daraufhin wird das flächige Material horizontal zur nächsten, beispielsweise durch eine geeignete Software zur Schnittoptimierung festgelegten Stelle verschoben. Die mit Klebstoffraupen versehene Konturschicht wird, ggf. zusammen mit dem bereits teilweise generierten Erzeugnis, dann gegen das Material verfahren, wodurch die Verklebung wirksam wird. Der Verfahrensablauf wiederholt sich daraufhin mit dem Ausschnitt der nächsten Konturschicht und in dieser Weise fortlaufend, bis das Erzeugnis vollständig aufgebaut ist.

Der so beschichtete Ausschnitt verfährt, insbesondere mit dem Hubtisch, im folgenden Schritt relativ in z-Richtung auf einen vertikalen Abstand zum Laserkopf und zum Material. Daraufhin wird das verbleibende Material schnittoptimiert in horizontaler Ebene zur nächsten Stelle verschoben, sodass die potenziell nächste Materialschicht über den Bauraum verfährt. Die Bewegung in der Ebene sowie die Drehung um die z-Achse können vom flächigen Material oder dem Hubtisch jeweils allein oder aufgeteilt auf beide vorgenommen werden.

Das mit Klebstoff beschichtete, teilweise generierte Erzeugnis verfährt im Anschluss durch den Hubtisch vertikal gegen das flächige Material, wodurch die Verklebung stattfindet. Bei biegeschlaffen Materialien wird eine entsprechende Vorrichtung zum Aufbringen des notwendigen Fügedrucks benötigt.

Der Ablauf der Prozessschritte
- Schneiden der benötigten Konturschicht,
- Klebstoffbeschichtung dieser,
- vertikales Verfahren der beschichteten Konturschicht bzw. des teilweise generierten Erzeugnisses mittels Hubtisch sowie ggf. Drehung um die z-Achse,
- horizontales Verfahren des flächigen Materials mittels Handhabungseinheit,
- vertikales Verfahren der beschichteten Konturschicht bzw. des teilweise generierten Erzeugnisses gegen das Material und
- die somit stattfindende Verklebung
wird so oft wiederholt, bis das zu generierende Erzeugnis vollständig aufgebaut ist. Die obere Konturschicht wird zum Schluss nicht mit Klebstoff beschichtet, sondern das fertige Erzeugnis wird ausgegeben.

Bei einer alternativen Ausgestaltung der erfindungsgemäßen Vorrichtung bzw. des resultierenden Verfahrens ist kein Klebstoffauftrag während des Verfahrensablaufs vorgesehen. Stattdessen ist eine Aktivierungsanordnung zur Aktivierung eines aktivierbaren Klebstoffs vorgesehen, mit dem das flächige Material bzw. die Konturschicht auf zumindest einer Oberfläche bereits versehen ist. Bei einer bevorzugten Ausgestaltung der Erfindung ist ein Aktivierungsbereich als ein heizbarer Heizbereich ausgeführt und der Klebstoff durch Wärme aktivierbar.

Vorteilhafterweise sind der Bearbeitungsbereich in einer ersten Ebene und der Aktivierungsbereich in einer unterhalb der ersten Ebene angeordneten zweiten Ebene vorgesehen. Der Hubbereich des Hubtischs ist wenigstens so groß, dass die jeweils obere Konturschicht des flächigen Materials auf dem Erzeugnis zwischen der ersten und der zweiten Ebene bewegbar ist.

Zur weiteren Schnittoptimierung können Zwischenspeicher Anwendung finden. Diese speichern Materiallagen mit bereits ausgeschnittenen Freiräumen, nachfolgend auch als Verschnittbogen bezeichnet, zwischen und werden dann wieder eingesetzt, wenn sie nach dem vorher generierten Schnittplan wieder benötigt werden bzw. dies wegen der Größe und Form der noch unbearbeiteten Bereiche ohne Freiräume möglich ist.

Ein weiterer Aspekt der vorliegenden Erfindung betrifft ein Verfahren zur Herstellung wenigstens eines generativ gefertigten Erzeugnisses aus übereinander angeordneten und miteinander gefügten Konturschichten aus einem flächigen Material, bevorzugt ein Faserwerkstoff, insbesondere Karton oder Pappe, wie z. B. Wellpappe. Nach der Erfindung wird eine erste und jede weitere Lage des flächigen Materials auf einem Hubtisch oder auf dem darauf teilweise ausgebildeten Erzeugnis derart positioniert, dass aus dem flächigen Material eine Konturschicht an der für den Aufbau des Erzeugnisses vorgesehenen Position ausgeschnitten werden kann. Die Konturschicht wird nach der Positionierung ausgeschnitten. Demnach wird die auszuschneidende Konturschicht, die noch Teil des flächigen Materials ist, auf den Hubtisch oder auf das darauf bereits teilweise ausgebildete Erzeugnis positioniert. Der grundsätzliche Verfahrensablauf wurde mit der Beschreibung der Vorrichtung bereits zuvor dargestellt. Die nachfolgende Beschreibung, die sich ausschließlich auf die Aspekte des erfindungsgemäßen Verfahrens bezieht, soll dies weiter verdeutlichen und untersetzen, ergänzt um Aspekte der für den erfindungsgemäßen Fertigungsprozess eingesetzten Materialien.

Bei dem erfindungsgemäßen Verfahren erfolgt in einem ersten Schritt die Bewegung des flächigen Materials in der horizontalen Ebene und durch Drehung um die vertikale Achse auf einem Maschinentisch in einem Bearbeitungsbereich einer lokal wirkenden Schneideinrichtung (oder in diesen Bearbeitungsbereich hinein).

Die Bewegung erfolgt in der Weise, dass die für die nächste Schicht benötigte Konturschicht in der vorgesehenen Position bzw. Orientierung aus dem flächigen Material ausgeschnitten wird. Alternativ wird die Drehung durch den Hubtisch und somit durch das bis dahin teilweise aufgebaute Erzeugnis ausgeführt. In einem zweiten Schritt wird der Hubtisch vertikal bis zu der Konturschicht angehoben und die Konturschicht auf dem Hubtisch oder, wenn zuvor bereits Konturschichten aufgebracht wurden, auf dem teilweise gebildeten Erzeugnis auf dessen Oberfläche aufgenommen.

Besonders bevorzugt erfolgt das Ausschneiden durch Laserschneiden. Es wird auf die Beschreibung und die Angabe der Vorteile des Laserschneidens oben verwiesen.

Es hat sich weiterhin als vorteilhaft erwiesen, wenn die zweite und jede weitere der Konturschichten nach der Positionierung mit der zuvor positionierten Konturschicht zumindest in einem Randbereich nahe der Schnittkontur verklebt wird. Der Klebstoffauftrag erfolgt zur unlösbaren Verbindung der Schichten, wozu entsprechend dem Bedarf Klebstoff bereitzustellen ist.

Der Klebstoff wird dazu bevorzugt direkt als ein weiterer Verfahrensschritt aufgebracht, wobei das flächige Material insgesamt, die jeweils aufzubringende Konturschicht oder das bereits teilweise generierte Erzeugnis auf der Oberfläche beschichtet wird. Bevorzugt ist die Beschichtung der Oberfläche der zuletzt auf das Erzeugnis aufgebrachten Konturschicht vorgesehen, besonders bevorzugt zur Einsparung von Klebstoff allein deren Randbereich. Alternativ ist die Verarbeitung von vorbeschichteten flächigen Materialien mit einem vor dem Verkleben reaktivierbaren Klebstoff möglich.

Weiterhin ist eine geeignete zugehörige Auftragstechnologie auszuwählen, die zudem eine gute Vereinbarkeit mit den übrigen Teilschritten des Verfahrens gewährleistet. Die Verklebungsqualität kann durch das Anpressen der Fügepartner zusätzlich verbessert werden. Dabei wird der Klebstoff auch in randnahe Hohlräume porösen Materials gepresst, was zu einer Vergrößerung der wirksamen Oberfläche führt.

Es hat sich als besonders vorteilhaft erwiesen, nur einen Teilbereich, nämlich die Randbereiche einer Schnittkontur, zu verkleben, denn die stärkste Belastung einer Klebstoffverbindung erfolgt bei Spalt- und Schälbelastungen, da dort die Klebefuge einer Linienlast ausgesetzt ist. Eine vollflächige Verklebung würde zu keiner höheren Belastbarkeit des zu generierenden Erzeugnisses führen und lediglich einen höheren Klebstoffverbrauch verursachen.

Als Auftragsarten für eine solche teilbereichsweise Verklebung sind insbesondere quasi-berührungslose Varianten von Vorteil, beispielsweise durch den Einsatz von Auftragssystemen für die Auftragsarten Spritzen, Tropfen und Gießen. Grund ist deren Variabilität hinsichtlich möglicher zu verklebender Formen bzw. Konturen.

Alternativ ist es vorgesehen, dass das flächige Material auf wenigstens einer Oberfläche mit einem durch eine Aktivierungsanordnung aktivierbaren Klebstoff versehen wird oder versehen ist und der Klebstoff nach der Positionierung mittels der Aktivierungsanordnung aktiviert wird. Besonders bevorzugt ist ein thermisch aktivierbarer Klebstoff, der demnach durch Wärme aktiviert wird. Hierzu verfährt der Hubtisch die ausgeschnittene Konturschicht aus dem Bearbeitungsbereich in einer ersten Ebene in den Aktivierungsbereich in einer zweiten Ebene unterhalb der ersten Ebene, der als bevorzugt bereits vorgeheizter bzw. vorgewärmter Heizbereich ausgeführt ist. Es ist nach einer alternativen oder entsprechend ergänzten Ausführungsform auch vorgesehen, dass der Hubtisch das teilweise generierte Erzeugnis im Aktivierungsbereich dreht.

Die vorausgehende Beschichtung des flächigen Materials, z. B. eines Wellpappbogens, kann mit Schmelzklebstoff erfolgen. Ein solcher Schmelzklebstoff ermöglicht es, in der Maschine reaktiviert zu werden, was lediglich durch Wärmeeinwirkung erfolgt. Bei einem vollflächigen Auftrag auf die gesamte Materialoberfläche wird der Schmelzklebstoff auch auf dem zu entsorgenden Verschnittbogen aufgetragen. Eine derartige Materialvorbereitung vereinfacht den Schritt der Materialbeschichtung, jedoch führt dies auch zu einem höheren Verbrauch des vergleichsweise teuren Klebstoffs. Zudem ist die Kombination eines petrochemischen Klebstoffs mit dem Papier bzw. der Wellpappe hinsichtlich der Recycelbarkeit nachteilig.

Diesen letztgenannten Nachteil vermeidet ein stärkebasierter Klebstoff, denn damit ist das gesamte Erzeugnis vollständig recycelbar. Bei der Anwendung des stärkebasierten Klebstoffs ergeben sich jedoch verfahrenstechnische Einschränkungen, weil die gesamte Beschichtungsapplikation direkt in der Maschine auszuführen ist. Wasserbasierte Nassklebstoffe sind nicht wie Schmelzklebstoffe auf einfache Weise reaktivierbar. Außerdem absorbiert das hydrophile Material der Wellpappe Wasser aus dem stärkebasierten Klebstoff, wodurch die Festigkeit der Struktur vermindert wird. Aus diesem Grund kann eine zwischenzeitliche Trocknung der bereits hergestellten Klebefugen notwendig werden. Abhilfe kann zwar hydrophobiertes Papier schaffen, jedoch wird hierdurch die Benetzbarkeit, die für den Klebevorgang benötigt wird, herabgesetzt. Weiterhin sind als Klebstoffe PVAC, Wasserglas, Haftklebstoffe oder chemisch aushärtende Klebstoffe einsetzbar. Haftklebstoffe sind beispielsweise von Aufklebern bekannt. Diese haben den Vorteil, dass sie dauerhaft klebrig sind. Somit kann der Haftklebstoff zu einem beliebigen Zeitpunkt aufgetragen werden, ohne dass ein verfrühtes Abbinden zu befürchten wäre. Selbst eine Unterbrechung des Fertigungsprozesses wäre nicht problematisch.

Der prinzipielle Ablauf bei der Verfahrensvariante mit aktivierbarem Klebstoff, insbesondere Schmelzklebstoff, wie er mit jeder Konturschicht wiederkehrend ausgeführt wird, ist wie folgt:
1. Dauerhaftes Heizen des als Heizzone ausgebildeten Aktivierungsbereichs;
2. Bewegung des Materials nach Schnittplan über den Bearbeitungsbereich (Verschieben und bei Bedarf Drehung um die z-Achse);
3. Verfahren in vertikaler Richtung (bei Bedarf zuvor auch Drehung) des Hubtischs gegen das Material, wodurch der aufgeheizte und damit aktivierte Klebstoff aus der vorherigen Konturschicht sich mit der neuen Konturschicht verbindet;
4. Ausschneiden der aktuellen Konturschicht mittels Laser und
5. Verfahren des Hubtischs in den als Heizzone ausgebildeten Aktivierungsbereich.

Der Hubbereich ist bevorzugt gleichzeitig als Heizbereich ausgeführt.

Der prinzipielle Ablauf bei der Verfahrensvariante mit raupenförmigem Klebstoffauftrag während des Aufbauprozesses, wie er mit jeder Konturschicht wiederkehrend ausgeführt wird, wurde bereits oben beschrieben. Der Klebstoff kann mittels einer Klebstoffdüse aufgetragen werden. Bei Nutzung des Verfahrens zur Verbindung anderer Materialien, wie z. B. Metallplatten zur Produktion von Kühlkörpern, können statt Klebstoffen auch andere Fügemedien, wie z. B. Lote, Verwendung finden.

Wie bei herkömmlichen Verfahren nach dem Laminated-Object-Manufacturing-Prinzip gilt es auch beim erfindungsgemäßen Verfahren die einzelnen Lagen des Materials zu trennen, die Ausschnitte zu handhaben und diese zum Erzeugnis zu fügen. Zusätzlich ist das überschüssige Material zu handhaben. Der wesentliche Unterschied besteht jedoch in der Kombination des Bauteilaufbaus des Erzeugnisses direkt unter der Schneideinrichtung, insbesondere dem Laser, und dem Bewegen, einschließlich Drehen, des Materials auf dem Maschinentisch relativ zum zu generierenden Erzeugnis. Somit wird der Handhabungsaufwand einzelner Zuschnitte stark vermindert.

Verschieden geformte Konturschichten, auch mit einem Schwerpunkt außerhalb des Zuschnitts, können problemlos positioniert und das Material mit Hilfe bekannter Nestingmethoden und dem Materialtransport auf dem Maschinentisch effektiv ausgeschnitten werden.

Das erfindungsgemäße Verfahren und die erfindungsgemäße Vorrichtung sollen die bekannten Nachteile des LOM überwinden, indem die Materialausnutzung optimiert und der Aufwand für die Handhabung möglichst weit gesenkt wird. Durch die Verarbeitung dickerer Materialien kann das neuartige Verfahren vorteilhaft für größere Erzeugnisse eingesetzt werden. Dadurch können Erzeugnisse in einer Größe automatisiert gefertigt werden, wie dies zuvor nicht möglich war.

Zusätzliche Vorteile der Erfindung gegenüber bekannten LOM-Verfahren:
- hohe Materialausnutzung;
- Verarbeitung vergleichsweise großer Materialdicken möglich (vorzugsweise Wellpappe);
- Herstellung des Erzeugnisses vergleichsweise schnell, da der Materialzusammenhalt in den einzelnen Schichten bereits besteht, in Kombination mit größeren Materialdicken - je größer die Bauteile desto effektiver das Verfahren und
- Herstellung großformatiger Erzeugnisse für Verpackungszwecke, als Dekorationsartikel, aber auch als Form für traditionelle Fertigungsverfahren wie den Sandformguss.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische perspektivische Darstellung einer Ausführungsform einer erfindungsgemäßen Vorrichtung zur Herstellung eines erfindungsgemäßen Erzeugnisses;
Fig. 2: eine schematische perspektivische Darstellung eines Verschnittbogens und einer Verschnittbahn nach dem Stand der Technik und unter Anwendung des erfindungsgemäßen Verfahrens im Vergleich;
Fig. 3: eine Abfolge eines erfindungsgemäßen Verfahrens zur Herstellung eines Erzeugnisses aus übereinander angeordneten flächigen, definiert konturierten Materiallagen in schematischer perspektivischer Darstellung und
Fig. 4: eine schematische perspektivische Darstellung einer Ausführungsform eines teilweise generierten erfindungsgemäßen Erzeugnisses aus übereinander angeordneten flächigen Materiallagen.

Fig. 1 zeigt eine schematische perspektivische Darstellung einer Ausführungsform einer erfindungsgemäßen Vorrichtung 1 zum Aufbau eines Erzeugnisses 22, aufgebaut aus Konturschichten 21 eines flächigen Materials 20. Die Vorrichtung 1 stellt ein zur Durchführung des erfindungsgemäßen Verfahrensansatzes gestaltetes Maschinenkonzepts dar, aufgebaut auf einem Gestell 2.

Das flächige Material 20 liegt als ein bogenförmiges Material, im Beispiel Wellpappe, vor, die nach der hier dargestellten Ausführungsform bereits mit aktivierbarem Schmelzklebstoff beschichtet ist. Die Wellpappe wird auf einem Maschinentisch 4 in x- und y-Richtung bewegt. Vorteilhaft ist zudem die Möglichkeit einer Drehung um die vertikale z-Achse. Hierfür ist eine Handhabungseinheit 14 oberhalb des Maschinentischs 4 vorgesehen. Dabei handelt es sich um ringförmig um eine Bearbeitungszone angeordnete Antriebseinheiten. Zum verbesserten Greifen des Materials 20 ist ein Vakuumgreifer 18 vorgesehen, der jedoch bei dem Material Wellpappe durch dessen Biegesteifigkeit nicht zum Einsatz kommt. Die Antriebseinheiten sind elektromotorisch angetrieben. Die Antriebseinheiten sind in ihrer Ausrichtung drehbar, so dass das Material 20 in jeder Richtung auf dem Maschinentisch 4 verschoben und zusätzlich auch gedreht werden kann. Hierzu sind jeweils 8 Antriebseinheiten oben sowie auch unten angeordnet, so dass im Fall, dass sich kein Material 20 zwischen zwei Antriebseinheiten befindet, die Bewegung dennoch problemlos durchgeführt werden kann.

Im zweiten Schritt verfährt der Hubtisch 15 mit dem bereits teilweise aufgebauten Erzeugnis 22' gegen das Material 20. Gleichzeitig findet die Verklebung statt. Die dünne Schicht des auf dem Material 20 befindlichen Schmelzklebstoffs schmilzt dazu in einem als Heizzone ausgeführten Aktivierungsbereich 16 zuvor auf und verbindet beide Fügepartner, die beiden aufeinander liegenden Konturschichten 21 (vergleiche auch Figuren 2, 3 und 4). Nach einer nicht dargestellten Alternative und unter Verzicht auf einen auf dem Material bereits befindlichen Schmelzklebstoff erfolgt die Verklebung durch einen auf der vorhergehenden Schicht raupenförmig entlang der Schnittkontur aufgebrachten Klebstoff.

Im nächsten Schritt, der Konturierung, wird ein Laserstrahl 12 über eine Scanneroptik abgelenkt und mittels einer Linse, wobei Scanneroptik und Linse zusammen eine Laserstrahlumlenkung 13 bilden, auf das Material 20 fokussiert. Mit Verwendung einer Laseranordnung mit F-Theta-Objektiv kann die Position der Laserkomponenten starr ausgeführt sein, was die Komplexität der gesamten Maschine verringert, jedoch mit höheren Kosten verbunden ist.

Im letzten Schritt verfährt der Hubtisch 15 mit dem um eine Konturschicht 21 gewachsenen, teilweise generierten Erzeugnis 22' wieder in der Aktivierungsbereich 16 und der Verfahrensablauf beginnt von vorn.

Eine Schneideinrichtung 10, ausgeführt als Laserschneideinrichtung mit Portalführung der Fokussiereinheit, die eine Grundanordnung der Strahlübertragung an einer 2D-Bearbeitungsanlage darstellt und über eine Zublasung von Druckluft sowie eine Absaugung des durch die Materialsublimation entstandenen Gases verfügt. Durch die Portalführung kann der Laserstrahl 12 an jeden Ort im Bearbeitungsbereich geführt werden, um die vorgesehene Bearbeitung vornehmen zu können. Eine solche Lösung mit einer beweglichen Schneideinrichtung 10, realisiert mittels Laserstrahls 12, der sich gegenüber einem feststehenden Material 20 bewegt, ist jedoch nicht von der Erfindung umfasst und nur zum allgemeinen Verständnis dargestellt.

Eine weitere Art der Laserstrahlübertragung, die hier nicht dargestellt ist, umfasst eine Spiegelanordnung, wobei der fokussierte Laserstrahl auf einen Punkt gerichtet ist. Das teilweise generierte Erzeugnis sowie das flächige Material sind dann unter diesem Laserstrahl so zu bewegen, dass die vorgesehene Bearbeitung stattfinden kann. Dies betrifft sowohl die Bewegung in x- und y-Richtung als auch deren Geschwindigkeit. Mit der Geschwindigkeit kann in Abhängigkeit von der Intensität des Laserstrahl beispielsweise festgelegt werden, ob ein Ausschneiden oder nur ein Gravieren des Werkstücks, hier des flächigen Materials 20, erfolgen soll.

Fig. 2 zeigt eine schematische perspektivische Darstellung eines Verschnittbogens 23` und einer Verschnittbahn 23" nach dem Stand der Technik (Darstellungen a und b) und eines Verschnittbogens 23 unter Anwendung des erfindungsgemäßen Verfahrens (Darstellung c).

In Darstellung a) ist der Verschnittbogen 23` zu erkennen, der über einer Bearbeitungsstelle schrittweise linear weitergeführt wurde. In Darstellung b) erfolgt der Ausschnitt benötigter Konturschichten aus einer Materialbahn. In beiden Fällen ist die Ausnutzung des Materials sehr gering, da große Randbereiche um die Ausschnitte herum ungenutzt bleiben, wobei die Bogenverarbeitung durch den Bogenwechsel einen noch höheren Ausschuss zur Folge hat. Dies entspricht dem Stand der Technik.

Darstellung c) zeigt hingegen einen Verschnittbogen 23, wie er nach Anwendung des erfindungsgemäßen Verfahrens und nach Ausschneiden der Konturschichten 21 verbleibt. Dabei ist erkennbar, dass für die Ausschnitte 21' der Konturschichten 21 ein optimiertes Layout gewählt wurde, was nicht nur den Ort, sondern auch die Winkelstellung des einzelnen Ausschnitts 21' betrifft. Dadurch sind die im Verschnittbogen 23 verbleibenden Randbereiche auf ein Minimum reduziert, was zu einer optimalen Ausnutzung des flächigen Materials 20 führt.

Fig. 3 zeigt eine schematische perspektivische Darstellung einer Ausführungsform eines erfindungsgemäßen Verfahrens zum Aufbau eines Erzeugnisses 22 aus Konturschichten 21 eines flächigen Materials 20. Dargestellt sind die Verfahrensschritte S0 bis S5 sowie deren Resultat, die erzeugten Konturschichten 21 und der Verschnittbogen 23 mit den ausgeschnittenen Bereichen, den Ausschnitten 21', die eine optimale Ausnutzung des Materials 20 zeigen.

Im Schritt S0 erfolgt das Ausschneiden der Konturschicht 21 durch die Schneideinrichtung 10 aus dem flächigen Material 20. Im Schritt S1 erfolgt der Klebstoffauftrag nahe der Schneidkontur der Konturschicht 21 unter Beachtung des Konturverlaufs und der Anordnung der folgenden Konturschicht. In Schritt S2 verfährt die mit Klebstoff beschichtete Konturschicht 21 bzw. das teilweise generierte und auf der Oberfläche der zuletzt angefügten Konturschicht 21 mit Klebstoff beschichtete Erzeugnis 22' relativ zum flächigen Material 20. In Schritt S3 wird der Bogen flächigen Materials 20 so verschoben, dass ein ausreichend großer Bereich des flächigen Materials 20 über dem teilweise generierten Erzeugnis 22' bzw. der zuvor hergestellten und auf dem teilweise generierten Erzeugnis 22' abgelegten Konturschicht 21 ausgerichtet wird. Dabei wird der Bogen flächigen Materials 20 so verschoben und das teilweise generierte Erzeugnis 22' um die z-Achse so gedreht, dass eine optimale Ausnutzung des Materials 20 nach einem zuvor berechneten Schnittplan erfolgt.

Ist die Positionierung des flächigen Materials 20 erfolgt, wird das teilweise generierte Erzeugnis 22' in Schritt S4 bis zur Unterseite des flächigen Materials 20 angehoben und verpresst, somit verklebt. Im letzten Schritt S5 erfolgt die Fertigung der nächsten Konturschicht 21 durch Ausschneiden mit der Schneideinrichtung 10. Insoweit entspricht Schritt S5 dem eingangs beschriebenen Schritt S0, jedoch mit dem bereits vorliegenden bzw. fortgeschrittenen teilweise generierten Erzeugnis 22'. Im Ergebnis und somit der letzten Verfahrensfolge bei der Generierung des Erzeugnisses 22 erfolgt kein Klebstoffauftrag auf die zuletzt ausgeschnittene Konturschicht, das Erzeugnis 22 ist fertiggestellt und muss neben dem restlichen Material, dem Verschnittbogen 23, aus der Vorrichtung 1 ausgegeben werden.

Fig. 4 zeigt eine schematische perspektivische Darstellung einer Ausführungsform eines teilweise generierten erfindungsgemäßen Erzeugnisses 22' aus übereinander angeordneten flächigen Konturschichten 21 während der Herstellung. Die derzeit letzte Konturschicht 21 weist zwei Klebezonen 25 auf. Der Klebstoff ist nur im Randbereich einer jeden Konturschicht 21 aufgetragen, wodurch bei minimalem Materialeinsatz eine anforderungsgerechte Verklebung, vor allem hinsichtlich Schäl- und Spaltbelastungen des Erzeugnisses 22, resultiert.

Bevorzugt wird der Einsatz von Auftragsarten, die keine Berührung der zu verklebenden Oberflächen mit einem Werkzeug erfordern. Hierzu gehören Spritzen, Tropfen und Gießen. Mit diesen Verfahren lassen sich sehr variabel unterschiedliche Bereiche und Formen mit Klebstoff versehen. Einfachere Formen, in denen der Klebstoffauftrag erfolgen soll, lassen sich jedoch auch insbesondere durch Walzen, Stempeln oder Rakeln realisieren. Auch Eintauchen insbesondere eines gleichmäßig geformten Randbereichs erscheint erfolgversprechend, während größere Flächen ohne scharfe Begrenzung auch durch Pinseln oder Spachteln beschichtet werden können.

### Bezugszeichenliste

- 1: Vorrichtung
- 2: Gestell
- 4: Maschinentisch
- 10: Schneideinrichtung
- 12: Laserstrahl
- 13: Laserstrahlumlenkung
- 14: Handhabungseinheit (oben)
- 15: Hubtisch
- 16: Aktivierungsbereich
- 18: Vakuumgreifer
- 20: flächiges Material
- 21: Konturschicht
- 21': Ausschnitt Konturschicht
- 22: Erzeugnis
- 22': teilweise generiertes Erzeugnis
- 23: Verschnittbogen
- 23`: Verschnittbogen nach dem Stand der Technik
- 23": Verschnittbahn nach dem Stand der Technik
- 25: Klebezone

## Patentansprüche

1. Vorrichtung zur Herstellung wenigstens eines generativ gefertigten Erzeugnisses (22) aus übereinander angeordneten und miteinander gefügten Konturschichten (21) aus einem flächigen Material (20), die Vorrichtung umfassend einen zur Aufnahme des Erzeugnisses (22) ausgebildeten Hubtisch (15), der vertikal über einen Hubbereich verfahrbar und der weiterhin ausgebildet ist, das flächige Material (20), bevor es ausgeschnitten wird, relativ zu dem Erzeugnis (22) zu positionieren, wobei weiterhin eine Schneideinrichtung (10) vorgesehen ist, mit der aus einer ersten und jeder weiteren Lage des flächigen Materials (20) eine Konturschicht (21) ausgeschnitten werden kann, wobei eine Relativbewegung von der Schneideinrichtung (10) und dem flächigen Material (20) während des Schneidvorgangs zum Ausschneiden der Konturschicht (21) aus dem flächigen Material (20) führt, **dadurch gekennzeichnet, dass** der Hubtisch (15) ausgebildet ist das auf dem Hubtisch (15) oder auf dem teilweise gebildeten Erzeugnis (22) auf dessen Oberfläche aufgenommene flächige Material (20) über einen Bearbeitungsbereich der ortsfest wirksamen Schneideinrichtung (10) relativ zu der Schneideinrichtung (10) horizontal zu bewegen.

2. Vorrichtung nach Anspruch 1, wobei eine Auftragsanordnung zur Herstellung eines Klebstoffauftrags vorgesehen ist, mit der das flächige Material (20) zumindest in einem Randbereich der Konturschicht (21) auf wenigstens einer Oberfläche beschichtet wird.

3. Vorrichtung nach Anspruch 1, wobei das flächige Material (20) zumindest in einem Randbereich der Konturschicht (21) einen aktivierbaren Klebstoffauftrag (25) umfasst und eine Aktivierungsanordnung zur Aktivierung des aktivierbaren Klebstoffauftrags (25) in einem Aktivierungsbereich (16) vorgesehen ist.

4. Vorrichtung nach einem der vorherigen Ansprüche, wobei die Schneideinrichtung (10) als eine Laseranordnung ausgeführt ist.

5. Vorrichtung nach Anspruch 3, wobei der Bearbeitungsbereich in einer ersten Ebene und der Aktivierungsbereich (16) in einer unterhalb der ersten Ebene angeordneten zweiten Ebene vorgesehen ist, wobei der Hubbereich wenigstens so groß ist, dass die jeweils obere Konturschicht aus dem flächigen Material (20) auf dem Erzeugnis (22) zwischen der ersten und der zweiten Ebene bewegbar ist.

6. Vorrichtung nach Anspruch 3 oder 5, wobei der Aktivierungsbereich (16) als ein erwämbarer Heizbereich und der Klebstoffauftrag (25) durch Wärme aktivierbar ist.

7. Vorrichtung nach einem der vorherigen Ansprüche, wobei der Hubtisch (15) eine Einrichtung zum Drehen des teilweise ausgebildeten Erzeugnisses (22') um eine vertikale z-Achse umfasst.

8. Verfahren zur Herstellung wenigstens eines generativ gefertigten Erzeugnisses (22) aus übereinander angeordneten und miteinander gefügten Konturschichten (21) aus einem flächigen Material (20), wobei eine erste und jede weitere Lage des flächigen Materials (20) auf einem Hubtisch (15) oder auf dem darauf teilweise ausgebildeten Erzeugnis (22') derart positioniert wird, dass aus dem flächigen Material (20) eine Konturschicht (21) an der für den Aufbau des Erzeugnisses (22) vorgesehenen Position ausgeschnitten werden kann, und danach die Konturschicht (21) ausgeschnitten wird, **dadurch gekennzeichnet, dass** in einem ersten Schritt die Positionierung des flächigen Materials (20) durch Bewegung in der horizontalen Ebene in x- und y-Richtung und/oder durch Drehung um die vertikale z-Achse in einem Bearbeitungsbereich einer lokal wirkenden Schneideinrichtung (10) erfolgt, wobei die Schneideinrichtung (10) als eine ortsfeste Schneideinrichtung (10) ausgeführt ist, in einem zweiten Schritt der Hubtisch (15) vertikal bis zu der Lage des flächigen Materials (20) angehoben und diese auf dem Hubtisch (15) aufgenommen oder mit dem teilweise gebildeten Erzeugnis (22) vereinigt wird, wobei sich in einem dritten Schritt das flächige Material (20) so relativ zu der ortsfesten Schneideinrichtung (10) bewegt, dass die gewünschte Konturschicht (21) in der vorgesehenen Position aus dem flächigen Material (20) ausgeschnitten wird.

9. Verfahren nach Anspruch 8, wobei das Ausscheiden durch Laserschneiden erfolgt.

10. Verfahren nach einem der Ansprüche 8 oder 9, wobei die zweite und jede weitere der Konturschichten (21) nach der Positionierung der Lage des flächigen Materials (20) und dem Ausschneiden der Konturschicht (21) mit der zuvor positionierten Konturschicht (21) zumindest in einem Randbereich verklebt wird.

11. Verfahren nach Anspruch 10, wobei zur Verklebung des flächigen Materials (20) der nachfolgend positionierten Konturschicht (21) die zuvor positionierte Konturschicht (21) mit einem Klebstoffauftrag (25) versehen wird.

12. Verfahren nach Anspruch 10, wobei das flächige Material (20) auf wenigstens einer Oberfläche mit einem durch eine Aktivierungsanordnung aktivierbaren Klebstoffauftrag (25) versehen wird oder versehen ist und der Klebstoff nach der Positionierung des flächigen Materials (20) mittels der Aktivierungsanordnung aktiviert wird.

13. Verfahren nach einem der Ansprüche 8 bis 12, wobei der Klebstoffauftrag (25) durch Wärme aktiviert wird und der Hubtisch (15) die ausgeschnittene Konturschicht (21) zur Aktivierung aus dem Bearbeitungsbereich in einer ersten Ebene in den Aktivierungsbereich (16) in einer zweiten Ebene unterhalb der ersten Ebene, der als Heizbereich ausgeführt ist, verfährt.

## Claims

1. A device for producing at least one product (22) generatively manufactured from contour layers (21) arranged one above the other and joined together from a sheet material (20), the device comprising a lifting table (15) configured to receive the product (22), which can be moved vertically over a lifting range and is further configured to position the sheet material (20) relative to the product (22) before it is cut out, wherein further a cutting device (10) is provided with which a contour layer (21) can be cut out of a first and each further layer of the sheet material (20), wherein a relative movement of the cutting device (10) and the sheet material (20) during the cutting process results in the contour layer (21) being cut out of the sheet material (20), **characterized in that** the lifting table (15) is configured to move the sheet material (20) received on the lifting table (15) or on the surface of the partially formed product (22) horizontally relative to the cutting device (10) over a processing region of the stationarily acting cutting device (10).

2. The device according to claim 1, wherein a coating arrangement for producing an adhesive coat is provided, with which the sheet material (20) is coated on at least one surface at least in an edge region of the contour layer (21).

3. The device according to claim 1, wherein the sheet material (20) comprises an activatable adhesive coat (25) at least in an edge region of the contour layer (21), and an activation arrangement for activating the activatable adhesive coat (25) is provided in an activation region (16).

4. The device according to any one of the preceding claims, wherein the cutting device (10) is implemented as a laser arrangement.

5. The device according to claim 3, wherein the processing region is provided in a first plane and the activation region (16) is provided in a second plane arranged below the first plane, wherein the lifting range is at least sufficiently large that the respective upper contour layer of the sheet material (20) can be moved on the product (22) between the first and the second plane.

6. The device according to claim 3 or 5, wherein the activation region (16) is implemented as a heatable heating region and the adhesive coat (25) can be activated by heat.

7. The device according to any one of the preceding claims, wherein the lifting table (15) comprises a device for rotating the partially formed product (22') about a vertical z-axis.

8. A method for producing at least one product (22) generatively manufactured from contour layers (21) arranged one above the other and joined together from a sheet material (20), wherein a first and each further layer of the sheet material (20) is positioned on a lifting table (15) or on the product (22') partially formed thereon such that a contour layer (21) can be cut out of the sheet material (20) at the position intended for the formation of the product (22), and thereafter the contour layer (21) is cut out, **characterized in that** in a first step the positioning of the sheet material (20) is carried out by movement in the horizontal plane in the x- and y-directions and/or by rotation about the vertical z-axis in a processing region of a locally acting cutting device (10), the cutting device (10) being configured as a stationary cutting device (10), in a second step the lifting table (15) is raised vertically up to the layer of the sheet material (20) and the latter is received on the lifting table (15) or is combined with the partially formed product (22), wherein in a third step the sheet material (20) moves relative to the stationary cutting device (10) such that the desired contour layer (21) is cut out of the sheet material (20) in the intended position.

9. The method according to claim 8, wherein the cutting out is performed by laser cutting.

10. The method according to any one of claims 8 or 9, wherein the second and each further one of the contour layers (21) is bonded to the previously positioned contour layer (21) at least in an edge region after positioning the layer of sheet material (20) and cutting out the contour layer (21).

11. The method according to claim 10, wherein for bonding the sheet material (20) of the subsequently positioned contour layer (21), the previously positioned contour layer (21) is provided with an adhesive coat (25).

12. The method according to claim 10, wherein the sheet material (20) is provided or has been provided on at least one surface with an adhesive coat (25) activatable by an activation arrangement, and the adhesive is activated after positioning of the sheet material (20) by means of the activation arrangement.

13. The method according to any one of claims 8 to 12, wherein the adhesive coat (25) is activated by heat and the lifting table (15) moves the cut-out contour layer (21) for activation from the processing region in a first plane into the activation region (16) in a second plane below the first plane, which is configured as a heating region.

## Revendications

1. Dispositif de fabrication d'au moins un produit fabriqué de manière additive (22) à partir de couches de contour (21) disposées l'une au-dessus de l'autre et assemblées l'une à l'autre en un matériau plan (20), le dispositif comprenant une table élévatrice (15) réalisée pour la réception du produit (22) qui peut être déplacée verticalement au-dessus d'une région de levage et qui est en outre réalisée pour positionner le matériau plan (20) avant qu'il ne soit découpé par rapport au produit (22), dans lequel une installation de découpe (10) est en outre prévue, avec laquelle une couche de contour (21) peut être découpée à partir d'une première couche et de chaque autre couche du matériau plan (20), dans lequel un déplacement relatif de l'installation de découpe (10) et du matériau plan (20) pendant le processus de découpe conduit à la découpe de la couche de contour (21) en le matériau plan (20), **caractérisé en ce que** la table élévatrice (15) est réalisée pour déplacer horizontalement par rapport à l'installation de découpe (10) le matériau plan (20) reçu sur la table élévatrice (15) ou sur le produit partiellement formé (22) sur sa surface par le biais d'une région d'usinage de l'installation de découpe (10) active de manière stationnaire.

2. Dispositif selon la revendication 1, dans lequel un agencement d'application pour la fabrication d'une application d'adhésif est prévu, avec lequel le matériau plan (20) est enduit sur au moins une surface au moins dans une région de bord de la couche de contour (21).

3. Dispositif selon la revendication 1, dans lequel le matériau plan (20) comprend une application d'adhésif activable (25) au moins dans une région de bord de la couche de contour (21) et un agencement d'activation pour l'activation de l'application d'adhésif activable (25) est prévu dans une région d'activation (16).

4. Dispositif selon une des revendications précédentes, dans lequel l'installation de découpe (10) est réalisée en tant qu'agencement laser.

5. Dispositif selon la revendication 3, dans lequel la région d'usinage est prévue dans un premier plan et la région d'activation (16) dans un second plan disposé en dessous du premier plan, dans lequel la région de levage est au moins aussi grande que la couche de contour à chaque fois supérieure en le matériau plan (20) peut être déplacée sur le produit (22) entre le premier et le second plan.

6. Dispositif selon la revendication 3 ou 5, dans lequel la région d'activation (16) peut être activée en tant que région chauffante pouvant être chauffée et l'application d'adhésif (25) peut être activée par de la chaleur.

7. Dispositif selon une des revendications précédentes, dans lequel la table élévatrice (15) comprend une installation pour la rotation du produit partiellement réalisé (22') autour d'un axe z vertical.

8. Procédé de fabrication d'au moins un produit fabriqué de manière additive (22) à partir de couches de contour (21) disposées l'une au-dessus de l'autre et assemblées l'une à l'autre en un matériau plan (20), dans lequel une première couche et chaque autre couche du matériau plan (20) sont positionnées sur une table élévatrice (15) ou sur le produit partiellement réalisé sur elle (22') de telle sorte qu'une couche de contour (21) peut être découpée à partir du matériau plan (20) à la position prévue pour la construction du produit (22), et la couche de contour (21) est ensuite découpée, **caractérisé en ce que** dans une première étape, le positionnement du matériau plan (20) s'effectue par déplacement dans le plan horizontal dans la direction x et y et/ou par rotation autour de l'axe z vertical dans une région d'usinage d'une installation de découpe à action locale (10), dans lequel l'installation de découpe (10) est réalisée en tant qu'installation de découpe stationnaire (10), dans une deuxième étape, la table élévatrice (15) est soulevée verticalement jusqu'à la couche du matériau plan (20) et celle-ci est reçue sur la table élévatrice (15) ou réunie avec le produit partiellement formé (22), dans lequel le matériau plan (20) se déplace dans une troisième étape par rapport à l'installation de découpe stationnaire (10) de sorte que la couche de contour souhaitée (21) est découpée du matériau plan (20) dans la position prévue.

9. Procédé selon la revendication 8, dans lequel le découpage s'effectue par découpage laser.

10. Procédé selon une des revendications 8 ou 9, dans lequel la deuxième couche et chaque autre couche des couches de contour (21) sont collées après le positionnement de la couche du matériau plan (20) et le découpage de la couche de contour (21) avec la couche de contour (21) positionnée auparavant au moins dans une région de bord.

11. Procédé selon la revendication 10, dans lequel la couche de contour (21) positionnée auparavant est pourvue d'une application d'adhésif (25) pour le collage du matériau plan (20) de la couche de contour (21) positionnée de manière subséquente.

12. Procédé selon la revendication 10, dans lequel le matériau plan (20) est pourvu sur au moins une surface d'une application d'adhésif (25) activable par un agencement d'activation et l'adhésif est activé au moyen de l'agencement d'activation après le positionnement du matériau plan (20).

13. Procédé selon une des revendications 8 à 12, dans lequel l'application d'adhésif (25) est activée par de la chaleur et la table élévatrice (15) déplace la couche de contour découpée (21) pour l'activation de la région d'usinage dans un premier plan dans la région d'activation (16) dans un second plan en dessous du premier plan, qui est réalisée en tant que région chauffante.
